# EUROPÄISCHE PATENTANMELDUNG

(11) **EP 3 865 783 A1**
(43) Veröffentlichungstag der Anmeldung: **18.08.2021**
(21) Anmeldenummer: 20156779.9
(22) Anmeldetag: 11.02.2020
(51) Int. Cl.: F24H 7/04, F01K 3/18, F28D 20/00

(54) **ENERGIESPEICHER ZUM SPEICHERN ELEKTRISCHER ENERGIE ALS WÄRME UND VERFAHREN HIERZU**

(71) Anmelder: Zwinkels, Andrew, 10827 Berlin (DE)
(72) Erfinder: Zwinkels, Andrew, 10827 Berlin (DE)
(74) Vertreter: Ridderbusch, Oliver

(57) **Zusammenfassung**

Ein Energiespeicher zum Speichern von elektrischer Energie als Wärme umfasst: einen elektrischen Heizer (10) zum Umwandeln von elektrischer Energie in Wärme; Wärmespeicherkörper (20), welche durch die Wärme erwärmt werden; einen Wärmetauscher (40) zum Ausgeben von Wärmeenergie aus dem Energiespeicher; ein Gehäuse (21), in dessen Innenraum (22) zumindest die Wärmespeicherkörper (20) angeordnet sind; und eine Druckausgleichsleitung (71), durch welche der Innenraum (22) des Gehäuses (21) mit einer Umgebung (5) verbunden ist. Eine Schutzgaserzeugungsanlage (90) ist mit der Druckausgleichsleitung (71) verbunden und eingerichtet zum Binden von Bestandteilen von durch die Druckausgleichsleitung (71) in das Gehäuse (21) einströmender Umgebungsluft.

## Beschreibung

### TECHNISCHES GEBIET

Die vorliegende Erfindung bezieht sich auf einen Energiespeicher zum Speichern von elektrischer Energie als Wärme. Außerdem betrifft die Erfindung ein entsprechendes Verfahren.

### HINTERGRUND

Im Zuge der verstärkten Nutzung regenerativer Energiequellen, insbesondere Wind- und Sonnenenergie, kommt es zu stärkeren Fluktuationen der erzeugten Elektrizitätsmenge. Daher nimmt die Bedeutung von Energiespeichern zum Speichern überschüssiger elektrischer Energie immer weiter zu. Für den verstärkten Umstieg auf regenerative Energiequellen kommt Energiespeichern eine Schlüsselrolle zu. Elektrochemische Speicher (Batterien) können trotz hoher Kosten nur verhältnismäßig geringe Energiemengen speichern. Weit größere Energiemengen können in Form von Wärmeenergie zwischengespeichert werden. In Zeiten geringerer Gewinnung von elektrischer Energie, beispielsweise bei Windflauten oder mangelnder Sonneneinstrahlung, kann die Wärmeenergie optional wieder teilweise in elektrische Energie umgewandelt werden; alternativ oder ergänzend kann sie auch für Heizzwecke genutzt werden.

Ein gattungsgemäßer Energiespeicher zum Speichern von elektrischer Energie als Wärme umfasst:
- einen elektrischen Heizer zum Umwandeln von elektrischer Energie in Wärme,
- Wärmespeicherkörper, welche durch die Wärme erwärmt werden,
- einen Wärmetauscher zum Ausgeben von Wärmeenergie aus dem Energiespeicher,
- ein Gehäuse, in dessen Innenraum zumindest die Wärmespeicherkörper angeordnet sind, und
- eine Druckausgleichsleitung, durch welche der Innenraum des Gehäuses mit einer Umgebung verbunden ist.

In entsprechender Weise umfasst ein gattungsgemäßes Verfahren zum Betreiben eines Energiespeichers zum Speichern von elektrischer Energie als Wärme die folgenden Schritte:
- Umwandeln von elektrischer Energie in Wärme mittels eines elektrischen Heizers;
- Erwärmen von Wärmespeicherkörpern durch die Wärme, wobei die Wärmespeicherkörper in einem Innenraum eines Gehäuses angeordnet sind;
- Ausgeben von Wärmeenergie aus dem Energiespeicher mittels eines Wärmetauschers; und
- Bereitstellen eines Druckausgleichs im Gehäuse über eine Druckausgleichsleitung, die mit dem Gehäuse verbunden ist.

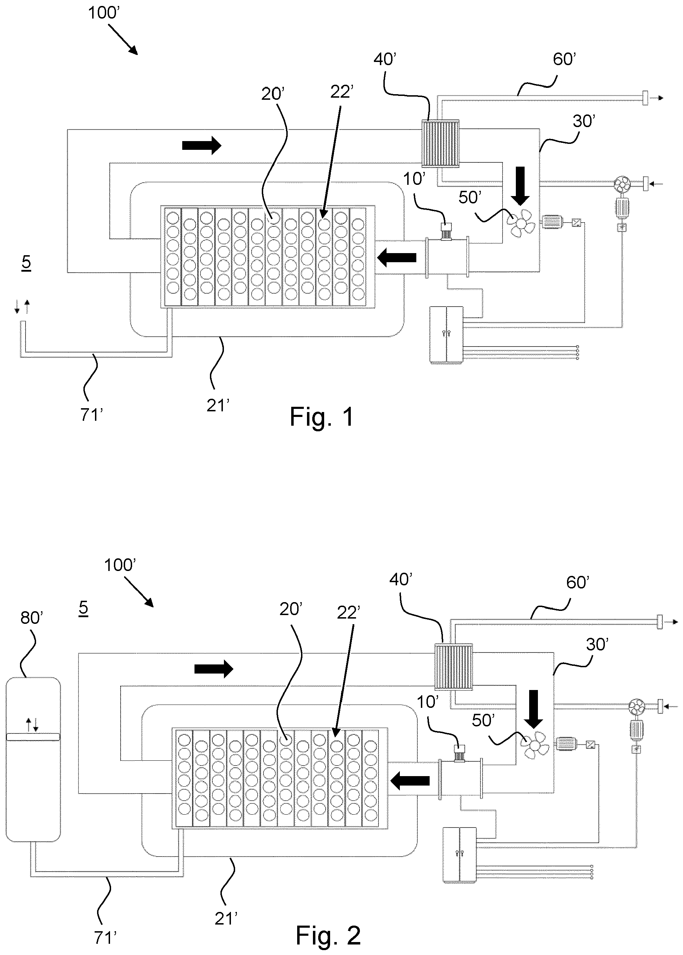

Ein gattungsgemäßer Energiespeicher 100' ist zur Veranschaulichung in Fig. 1 gezeigt. Die nachfolgenden Eigenschaften des gattungsgemäßen Energiespeichers 100' können auch bei einem erfindungsgemäßen Energiespeicher verwirklicht sein, sofern nicht ausdrücklich anders angemerkt. Der Energiespeicher 100' umfasst einen elektrischen Heizer 10', welcher mit Hilfe von elektrischer Energie ein Wärmetransferfluid erhitzt. Das Wärmetransferfluid kann insbesondere ein Gas oder Gasgemisch sein. Wird zur sprachlichen Kürze nachstehend ein "Gas" genannt, soll dies auch ein Gasgemisch umfassen können. Der Energiespeicher 100' umfasst weiterhin Wärmespeicherkörper 20', welche in einem Innenraum 22' eines Gehäuses 21' aufgenommen sind. Die Wärmespeicherkörper 20' können insbesondere Metallkörper oder Metallstangen sein. Das vom elektrischen Heizer 10' erhitzte Gasgemisch wird zu den Wärmespeicherkörpern 20' geleitet und erhitzt diese. Zum Entnehmen von Wärmeenergie wird das Gasgemisch (Wärmetransferfluid) zu einem Wärmetauscher 40' geleitet, wo beispielhaft Wärme auf ein anderes Fluid in einem separaten Kreislauf 60' übertragen wird. Das Wärmetransferfluid wird entlang eines Fluidkreislaufs 30' befördert, wozu eine Strömungsmaschine 50', beispielsweise ein Ventilator, vorhanden ist.

Weil die Wärmespeicherkörper 20' zur Energiespeicherung über ein großes Temperaturintervall betrieben werden, hat auch das Wärmetransferfluid betriebsabhängig sehr unterschiedliche Temperaturen. Dadurch kann auch der Druck des Wärmetransferfluides über einen großen Druckbereich variieren. Ein übermäßiger Druck im Gehäuse 21' sollte vermieden werden, beispielsweise aus Sicherheitsgründen. Daher umfasst der Energiespeicher 100' eine Druckausgleichsleitung 71', welche mit einem Innenraum 22' des Gehäuses 21' verbunden ist.

Bei der in Fig. 1 dargestellten Gestaltung führt die Druckausgleichsleitung 71' in eine Umgebung 5 des Energiespeichers 100'. Bei einem übermäßigen Druck im Gehäuse 21' kann ein Teil des Wärmetransferfluides aus dem Gehäuse 21' in die Umgebung 5 austreten. Kühlt darauf das Wärmetransferfluid im Gehäuse 21' ab und sinkt somit der Druck im Gehäuse 21', muss auch wieder Wärmetransferfluid in das Gehäuse 21' einströmen, wozu bei Fig. 1 Umgebungsluft durch die Druckausgleichsleitung 71' einströmt. In dieser Gestaltung ist nachteilig, dass Umgebungsluft Bestandteile haben kann (beispielsweise Feuchtigkeit, Salze oder einen erheblichen Anteil an Sauerstoffgas O₂), welche gerade bei metallischen Wärmespeicherkörpern 20' zu Korrosion oder Materialschäden führen können.

Ein ähnlicher gattungsgemäßer Energiespeicher ist von der Anmelderin im erteilten US-Patent Nr. US 10,077,949 B2 beschrieben, siehe beispielsweise den dortigen Anspruch 1 und die Fig. 2.

Das Einleiten eines Gasgemisches mit störenden Partikeln kann vermieden werden, indem ein Expansionsvolumen mit dem Gehäuse verbunden wird. Ein solcher Aufbau wurde von der Anmelderin in Fig. 7 aus WO 2019/025182 A1 beschrieben und ist schematisch in der beigefügten Fig. 2 gezeigt. Hierbei führt die Druckausgleichsleitung 71' nicht in eine Umgebung 5, sondern zu einem Expansionsvolumen 80'. Das Expansionsvolumen 80' ermöglicht eine Volumenvariation des vom Wärmetransferfluid eingenommenen Raums. Beispielsweise kann das Expansionsvolumen 80' einen Behälter mit elastischer Membran umfassen, welche druckabhängig verformt wird. So kann ein übermäßiger Druck des Wärmetransferfluides vermieden werden, ohne dass Wärmetransferfluid an eine Umgebung 5 abgegeben wird. Folglich muss auch nicht als Wärmetransferfluid aus der Umgebung Luft mit potentiell störenden Bestandteilen aufgenommen werden. Bei Nutzung eines Expansionsvolumens 80' kann insbesondere ein Schutzgas ausgewählt werden, welches nicht oder nur kaum zu Korrosion von Metallkomponenten im Gehäuse 21' führt, oder es kann ein Wärmetransferfluid mit besonders guten Wärmetransfereigenschaften gewählt werden. Nachteilig an der Nutzung eines Expansionsvolumens 80' ist der erheblich gesteigerte Raumbedarf.

Es wäre wünschenswert, einen Druckausgleich im Gehäuse 21' zu ermöglichen, ohne den hohen Raumbedarf des Expansionsvolumens aus Fig. 2 in Kauf zu nehmen und ohne Umgebungsluft mit störenden Partikeln wie bei Fig. 1 einzuleiten.

Diesbezügliche Fortschritte sind von der Anmelderin in der noch unveröffentlichten europäischen Patentanmeldung mit der Anmeldenummer 19 162 635.7, eingereicht am 13.03.2019, beschrieben.

### KURZFASSUNG

Als eine **Aufgabe** der Erfindung kann angesehen werden, ein Verfahren und einen Energiespeicher zum Speichern von elektrischer Energie als Wärme anzugeben, wobei ein Druckausgleich im Gehäuse des Energiespeichers effizient ermöglicht wird, ohne dass übermäßige Mengen an materialbeanspruchenden Gasen in das Gehäuse gelangen.

Diese Aufgabe wird durch den Energiespeicher mit den Merkmalen des Anspruchs 1 und durch das Verfahren mit den Merkmalen des Anspruchs 15 gelöst.

Vorteilhafte Varianten des erfindungsgemäßen Energiespeichers und des erfindungsgemäßen Verfahrens sind Gegenstand der abhängigen Ansprüche und werden außerdem in der folgenden Beschreibung erläutert.

Der Energiespeicher der oben genannten Art umfasst erfindungsgemäß eine Schutzgaserzeugungsanlage. Diese ist mit der Druckausgleichsleitung verbunden und eingerichtet zum Binden von Bestandteilen von durch die Druckausgleichsleitung in das Gehäuse einströmender Umgebungsluft.

In entsprechender Weise sind bei dem Verfahren der oben genannten Art erfindungsgemäß die folgenden Schritte vorgesehen:
- Aufnehmen von Umgebungsluft aus einer Umgebung in eine Schutzgaserzeugungsanlage, die mit der Druckausgleichsleitung verbunden ist;
- Binden von Bestandteilen der aufgenommenen Umgebungsluft in der Schutzgaserzeugungsanlage; und
- Einleiten von durch die Schutzgaserzeugungsanlage behandelter Umgebungsluft in den Innenraum des Gehäuses.

In das Gehäuse des Energiespeichers wird also mit Hilfe der Schutzgaserzeugungsanlage Umgebungsluft eingeleitet, welcher bestimmte Bestandteile entzogen wurden. Die in dieser Weise behandelte Umgebungsluft wird als Schutzgas bezeichnet und enthält weniger oder keine der für die Wärmespeicherkörper potentiell schädlichen Bestandteile. Hierzu können Sauerstoffgas und Feuchtigkeit zählen, welche Korrosion beschleunigen können, oder auch Staubpartikel, Salze oder andere Chemikalien, welche sich an Komponenten im Gehäuse ablagern und eine nachteilige Wirkung haben können.

### Optionale Eigenschaften

Die Schutzgaserzeugungsanlage kann insbesondere einen oder mehrere aus einem Sauerstofffilter, einem Luftentfeuchter, einem Chemikalienfilter oder Entsalzer und/oder einem Partikelfilter umfassen. Hiermit werden Bestandteile der Umgebungsluft entfernt und gelangen nicht in das Gehäuse. Vorteilhafterweise muss kein Reservoir mit Schutzgas vorgehalten werden und dennoch kann sichergestellt werden, dass stets ein Druckausgleich im Gehäuse möglich ist, ohne dass Verunreinigungen durch eingelassene Gase in das Gehäuse gelangen.

Die Schutzgaserzeugungsanlage kann auch als mehrstufige Filteranlage mit mehreren der vorgenannten Komponenten gestaltet sein. Komponenten der Schutzgaserzeugungsanlage, insbesondere der Luftentfeuchter, Chemikalienfilter oder Partikelfilter, können wie in der Figurenbeschreibung erläutert gestaltet sein. Um Wiederholungen zu vermeiden, wird daher für deren Gestaltung auf die Figurenbeschreibung verwiesen, wobei zu verstehen ist, dass die Gestaltung dieser Teile der Schutzgaserzeugungsanlage unabhängig von übrigen beispielhaften Designs von Komponenten des Energiespeichers ist.

### Sauerstofffilter

Ein Energiespeicher mit Sauerstofffilter wurde von der Anmelderin in der europäischen Patentanmeldung mit der Anmeldenummer 19 162 635.7, eingereicht am 13.03.2019, beschrieben. Der Inhalt dieser Anmeldung wird durch Bezugnahme hierin aufgenommen; insbesondere kann der vorliegende Sauerstofffilter so gestaltet sein wie der in EP 19 162 635.7 als "Schutzgaserzeuger" beschriebene Sauerstofffilter.

Der Sauerstofffilter umfasst ein mit Sauerstoffgas reagierendes Material (Reduktionsmittel) zum Reduzieren eines Sauerstoffgehalts aufgenommener Umgebungsluft. Dadurch haben Gase, die über die Druckausgleichsleitung und den Sauerstofffilter in das Gehäuse einströmen, einen im Vergleich zu Umgebungsluft reduzierten Sauerstoffgasgehalt. Es wird demnach Umgebungsluft eingeleitet, welcher ein Teil des Sauerstoffanteils entzogen ist.

Unter Sauerstoffgas soll molekularer Sauerstoff O₂ verstanden werden, welcher leicht metallische Wärmespeicherkörper oder andere Metallkomponenten oxidieren könnte. Der Begriff "Sauerstoffgehalt" bezeichnet den Anteil an Sauerstoffgas O₂ und umfasst nicht andere sauerstoffhaltige Gase, wie CO₂, die weniger reaktionsfreudig sind und daher zu keiner Beeinträchtigung metallischer Wärmespeicherkörper führen. Durch den Schutzgaserzeuger muss daher nicht zwingend die atomare Menge an Sauerstoff, sondern vielmehr der Anteil an Sauerstoffgas der einströmenden Gase reduziert werden.

Das mit Sauerstoffgas reagierende Material (Reduktionsmittel) des Sauerstofffilters kann prinzipiell ein beliebiges Material sein, welches chemisch mit Sauerstoffgas reagiert. Beispielsweise kann es sich um Kohlenstoff oder eine kohlenstoffhaltige Verbindung handeln, insbesondere Kohle, Graphit, Carbon oder Carbon-Pellets, gepresstes Kohlen(stoff)pulver oder poröse Körper. Durch solche, insbesondere als Feststoff vorliegenden, kohlenstoffhaltigen Verbindung reagiert Sauerstoffgas insbesondere zu CO₂, womit im Wesentlichen N₂ und CO₂ aber kaum O₂ in das Gehäuse eingeleitet werden.

Alternativ oder zusätzlich kann das mit Sauerstoffgas reagierende Material auch ein Metall oder ein metallbasiertes Material umfassen. Das Metall oxidiert und bindet so den Sauerstoff, so dass ebenfalls weniger O₂ in das Gehäuse eingeleitet wird. Als Metalle können beispielsweise Zink, Kobalt, Eisen oder Stahlwolle verwendet werden. Damit eine möglichst große Oberfläche des Reduktionsmittels zum Reagieren mit Sauerstoffgas bereitgestellt wird, kann das Reduktionsmittel in Form von Drähten, Gittern, Geweben oder Granulat vorliegen. Auch kann es auf einem Träger, beispielsweise in/auf Folien oder Papierbögen, angebracht sein. Weitere Beispiele für Reduktionsmittel sind Alkalimetalle, insbesondere Lithium, Natrium und Kalium; Magnesium oder Aluminium; Hydride wie Lithiumaluminiumhydrid, Natriumborhydrid oder Natriumhydrid; Ascorbinsäure, ungesättigte Kohlenwasserstoffe, Nylonpolymere, Salze oder auch Natriumsulfit, Natriumdithionit, Natriumthiosulfat oder Hydrazin sowie Aldehyde.

Der Schutzgaserzeuger kann auch einen Ionisator zum Ionisieren von Sauerstoffgas umfassen, um so eine chemische Reaktion zum Binden des Sauerstoffgases zu erleichtern. Der Ionisator kann insbesondere auf elektrischen Feldern beruhen.

### Austauschbare Kassetten

Durch die Reaktion mit Sauerstoff wird das Reduktionsmittel des Sauerstofffilters aufgebraucht. Bei kohlenstoffhaltigen Reduktionsmitteln wird aus O₂ insbesondere CO₂ erzeugt, welches in das Gehäuse eingeleitet wird. Der Kohlenstoffgehalt des Reduktionsmittels sinkt somit. Hingegen oxidieren auf Metallen basierende Reduktionsmittel durch Sauerstoffgas zu Metalloxiden, welche anschließend nicht mehr oder kaum mit nachfolgendem Sauerstoffgas reagieren können. Daher ist ein regelmäßiger Austausch des Reduktionsmittels notwendig. Zu diesem Zweck kann der Sauerstofffilter eine Kassettenhalterung umfassen, wobei das Reduktionsmittel in einer austauschbaren Kassette angeordnet ist. Die Kassette kann in der Kassettenhalterung gehalten werden. Die Form der Kassette und der Kassettenhalterung können so gewählt sein, dass nur ein Einsetzen in einer bestimmten Ausrichtung möglich ist. Der Sauerstofffilter kann ein Gehäuse umfassen, in welchem die Kassettenhaltung und die Kassette angeordnet sind. Über eine verschließbare Öffnung im Gehäuse kann die Kassette entnommen werden. Das Gehäuse ist so gebaut, dass durchströmende (Umgebungs-)luft zwingend am Reduktionsmittel entlang bzw. durch dieses durch strömen muss, insbesondere durch die Kassette durch. Abhängig vom gewählten Reduktionsmittel, kann es auch möglich sein, Reduktionsmittel, welches Sauerstoffgas aufgenommen hat, wiederherzustellen / zu regenerieren, z.B. durch Erhitzen des Reduktionsmittels. Während einer solchen Regenerationsphase wird eine Verbindung der Schutzgaserzeugungsanlage zum Gehäuse blockiert, um einen Eintritt von Sauerstoffgas in das Gehäuse zu vermeiden.

Alternativ oder zusätzlich kann die Schutzgaserzeugungsanlage auch eine oder mehrere Kassettenhalterungen für einen Luftentfeuchter, Entsalzer, Partikelfilter und/oder weitere Filter umfassen, womit entsprechend eine Luftentfeuchterkassette, Entsalzerkassette, Partikelfilterkassette oder Filterkassette gehalten wird. Diese Kassettenhalterungen können wie die oben beschriebene Kassettenhalterungen des Sauerstofffilters gestaltet sein.

### Temperatureinstellung der Schutzgaserzeugungsanlage

Eine Effizienz der Schutzgaserzeugungsanlage kann temperaturabhängig sein. Daher kann diese eine Heizung umfassen zum Erwärmen des Reduktionsmittels bzw. Filters (insbesondere des Luftentfeuchters, Chemikalienfilters, Entsalzers oder Partikelfilters). Die Heizung kann elektrisch betrieben sein und beispielsweise eine Ohm'sche Hitzequelle sein. Damit das Reduktionsmittel bzw. der Filter nicht unnötig schnell aufgebraucht wird, kann eine Steuereinheit zum Ein- und Ausschalten der Heizung vorgesehen sein. Die Steuereinheit schaltet die Heizung insbesondere nur dann ein, wenn ein Einströmen von Gasen in das Gehäuse erfolgt. Dies kann beispielsweise über einen Drucksensor gesteuert erfolgen. Der Drucksensor kann im Gehäuse angeordnet sein, wobei die Heizung eingeschaltet wird, wenn eine Druckuntergrenze unterschritten wird. Alternativ kann die Heizungseinschaltung auch an eine Strömung, Strömungsmessung oder Einwegventilstellung in der Druckausgleichsleitung gekoppelt sein.

Für einen idealen Betriebstemperaturbereich ist die Schutzgaserzeugungsanlage thermisch entkoppelt von den Wärmespeicherkörpern. Insbesondere kann das Gehäuse von einer Wärmeisolierung umschlossen sein oder eine Wärmeisolierung aufweisen, wobei sich die Schutzgaserzeugungsanlage außerhalb der Wärmeisolierung befindet.

Je nach Gestaltung der Filter der Schutzgaserzeugungsanlage kann eine Regenerierung eines Filters erfolgen, indem dieser intervallweise durch die Heizung erhitzt wird. Manche adsorbierende Filtermaterialien geben die adsorbierten Stoffe bei Erhitzen wieder ab. Bei anderen Filtergestaltungen, z.B. metallischen Gittern, können gefangene Partikel verbrannt und gelöst werden. Bei einer solchen Regeneration kann es vorgesehen sein, dass die freiwerdenden Bestandteile ausgestoßen werden müssen (so dass sie nicht in Richtung des Gehäuses mit den Wärmespeicherkörpern gelangen). Dies ist insbesondere mit einem motorisiert öffenbaren Verschluss oder Ventil möglich. Dabei kann ausgenutzt werden, dass bei höheren Temperaturen im Gehäuse ein Überdruck entsteht, welcher sodann am Ende einer Regenerationsphase die freiwerdenden Bestandteile durch den geöffneten Verschluss ausstoßen kann.

### Druckausgleichsleitung

Prinzipiell kann sowohl ein Einströmen von Gas in das Gehäuse als auch ein Ausströmen von Gas aus dem Gehäuse über dieselbe Druckausgleichsleitung erfolgen. Die Schutzgaserzeugungsanlage kann so angeordnet sein, dass sie nur von einströmendem Gas durchlaufen wird und nicht von ausströmendem Gas, wozu die Druckausgleichsleitung beispielsweise eine Abzweigung und optionale Ventile umfassen kann. Bei einem konstruktiv besonders einfachen Ausbau wird die Schutzgaserzeugungsanlage sowohl von einströmender Luft als auch ausströmendem Gas durchlaufen.

Damit die Schutzgaserzeugungsanlage allein von einströmender Luft durchlaufen wird, kann zusätzlich zur Druckausgleichsleitung (die in diesem Fall allein für einströmendes Gas genutzt wird) auch eine Auslassleitung vorgesehen sein. Über Einwegventile kann gesteuert werden, dass ein Druck im Gehäuse in einem vorgegebenen Bereich bleibt. In der Druckausgleichsleitung oder an der Schutzgaserzeugungsanlage kann ein Einlass-Einwegventil angeordnet sein, welches einen Fluidauslass aus dem Gehäuse verhindert und eine Strömung von der Schutzgaserzeugungsanlage in das Gehäuse druckabhängig erlaubt. Das Einlass-Einwegventil kann stromaufwärts von der Schutzgaserzeugungsanlage (also in Strömungsrichtung vorn der Schutzgaserzeugungsanlage) angeordnet sein. Hierdurch wird die Schutzgaserzeugungsanlage tatsächlich auch nur für Luft/Gase genutzt, die in das Gehäuse eingeleitet werden. Ist das Einlass-Einwegventil geschlossen, gelangt bei dieser Anordnung keine Umgebungsluft zur Schutzgaserzeugungsanlage. Alternativ kann das Einlass-Einwegventil aber auch stromabwärts von der Schutzgaserzeugungsanlage, also zwischen der Schutzgaserzeugungsanlage und dem Gehäuse, angeordnet sein. Dadurch wird verhindert, dass übermäßig heißes Wärmetransferfluid die Schutzgaserzeugungsanlage erreichen kann. Prinzipiell können auch Einlass-Einwegventile sowohl vor als auch hinter der Schutzgaserzeugungsanlage vorgesehen sein.

Das Einlass-Einwegventil öffnet, sobald ein Druck im Gehäuse um mindestens eine Druckdifferenz kleiner ist als ein Umgebungsluftdruck, wobei die Druckdifferenz insbesondere einen Wert zwischen 0,1 bar und 0,5 bar betragen kann. Hat die Umgebungsluft einen Normaldruck von etwa 1 bar, so öffnet das Einlass-Einwegventil demnach, sobald der Druck im Gehäuse unter einen Schwellwert sinkt, wobei der Schwellwert zwischen 0,9 bar und 0,5 bar betragen kann.

Zum Druckausgleich kann auch eine Auslassleitung am Gehäuse vorhanden sein, welche einen Fluidauslass aus dem Gehäuse in eine bzw. die Umgebung des Energiespeichers ermöglicht. In der Auslassleitung ist optional ein Auslass-Einwegventil angeordnet, welches einen Fluideinlass in das Gehäuse verhindert und eine Strömung aus dem Gehäuse heraus druckabhängig erlaubt.

Das Auslass-Einwegventil kann so gestaltet sein, dass es öffnet, sobald ein Druck im Gehäuse um mindestens eine Druckdifferenz größer ist als ein Umgebungsluftdruck. Die Druckdifferenz zum Öffnen des Auslass-Einwegventils kann prinzipiell einen beliebigen positiven Wert haben. Es kann jedoch bevorzugt sein, wenn die Druckdifferenz betragsmäßig größer ist als die Druckdifferenz zum Öffnen des Einlass-Einwegventils. Hierdurch hat das Wärmetransferfluid im Gehäuse betriebsabhängig häufiger einen leicht erhöhten Druck im Vergleich zum Atmosphärendruck. Durch einen erhöhten Druck können die Wärmetransfereigenschaften verbessert sein. Die Druckdifferenz zum Öffnen des Auslass-Einwegventils (also die Differenz zum Umgebungsluftdruck) kann beispielsweise einen Wert zwischen 1,3 bar und 5 bar oder zwischen 1,3 bar und 2 bar haben.

Anstelle der beschriebenen Einwegventile können auch andere Ventile oder steuerbare Verschlüsse eingesetzt werden.

### Allgemeine Eigenschaften

Das Gehäuse wird von Wärmetransferfluid durchströmt, um Wärme auf die Wärmespeicherkörper zu übertragen und/oder Wärme von den Wärmespeicherkörpern zu empfangen. Das Wärmetransferfluid kann gasförmig sein. Prinzipiell kann es auch Dampf umfassen, beispielsweise Wasserdampf. Bevorzugt kann das Wärmetransferfluid Luft sein oder Luft umfassen. Unter Luft kann ein Gasgemisch, insbesondere Umgebungsluft, verstanden werden, welches auch Verunreinigungen und/oder Tröpfchen oder Feuchtigkeit beinhalten kann. Durch die Schutzgaserzeugungsanlage kann sichergestellt werden, dass die Luft weniger Sauerstoffgas, Feuchtigkeit oder andere störende Bestandteile enthält als eine Umgebung des Energiespeichers. Daher stellt das Wärmetransferfluid im Gehäuse ein Schutzgas dar, welches nicht oder nur kaum zu Korrosion von Metallkomponenten im Gehäuse führt. Die über die Schutzgaserzeugungsanlage aufbereitete und eingeleitete Umgebungsluft bildet zumindest einen Teil des Wärmetransferfluides.

Die Schutzgaserzeugungsanlage kann prinzipiell auch innerhalb des Gehäuses angeordnet sein und über die Druckausgleichsleitung mit einer Umgebung des Gehäuses verbunden sein. Die Umgebung kennzeichnet den Bereich außerhalb des Gehäuses und kann entweder offen sein oder zumindest ein Volumen (beispielsweise eine Halle) sein, welches mindestens zehn Mal so groß wie der Innenraum des Gehäuses ist. Als Innenraum des Gehäuses wird der vom Gehäuse umgebende Bereich verstanden, in dem auch die Wärmespeicherkörper angeordnet sind. Das Gehäuse kann verschiedene Anschlussöffnungen umfassen, beispielsweise für Wärmetransferfluidleitungen oder die Druckausgleichsleitung. Die Nennung einer Druckausgleichsleitung soll nicht im Sinne einer einzigen Druckausgleichsleitung verstanden werden. Vielmehr können eine oder mehrere Druckausgleichsleitungen vorhanden sein, die entweder mit derselben Schutzgaserzeugungsanlage oder mit jeweils einer Schutzgaserzeugungsanlage verbunden sind.

Die Wärmespeicherkörper im Gehäuse können prinzipiell beliebiger Art sein und insbesondere auch Steine umfassen. Die Vorteile der Schutzgaserzeugungsanlage kommen aber besonders zum Tragen, wenn die Wärmespeicherkörper Metallkörper sind oder umfassen. Das heißt, die Metallkörper bilden den Teil des Wärmespeichers, in dem bei Erhitzung der wesentliche Energieanteil, beispielsweise mindestens 80% der aufgenommenen Wärmeenergie, gespeichert wird. Die Metallkörper können insbesondere mehrere Vertikalstangen umfassen, an denen jeweils mehrere Horizontalstangen befestigt sind. Dieser Aufbau kann ausgeführt sein wie von der Anmelderin beschrieben in EP 18 203 053.6, eingereicht am 29.10.2018, wobei der Offenbarungsgehalt dieser Anmeldung in seiner Gesamtheit, insbesondere in Bezug auf die Gestaltung der Wärmespeicherkörper und ihrer Vertikal- und Horizontalstangen, durch Bezugnahme hierin aufgenommen ist.

Als Gehäuse kann allgemein der Gehäuseabschnitt, welcher die Wärmespeicherkörper umgibt, angesehen werden; optional können unter dem Gehäuse auch Verbindungsleitungen als mitumfasst verstanden werden, welche wie auch das Gehäuse von Wärmetransferfluid durchströmt werden. Für den Druckausgleich und die Nutzung der Schutzgaserzeugungsanlage kommt es im Wesentlichen auf eine Verbindung zu einem Bereich an, welcher fluidmäßig mit dem Gehäuseabschnitt der Wärmespeicherkörper verbunden ist. So kann die Schutzgaserzeugungsanlage auch fluidmäßig mit einer Wärmetransferfluidleitung verbunden sein, welche in den Gehäuseabschnitt der Wärmespeicherkörper hineinführt, oder mit einer Wärmetransferfluidleitung, welche vom Gehäuseabschnitt der Wärmespeicherkörper wegführt. Es kann auch eine Strömungsmaschine, beispielsweise ein Ventilator, zum Befördern des Wärmetransferfluides vorhanden sein, insbesondere um das Wärmetransferfluid am elektrischen Heizer, den Wärmespeicherkörpern und dem Wärmetauscher entlang zu zirkulieren. Es kann ein Fluidkreislauf gebildet sein, welcher an diesen Komponenten entlang führt. Die Druckausgleichsleitung kann auch benachbart zur Strömungsmaschine oder an prinzipiell beliebiger Stelle am Fluidkreislauf angeordnet sein.

Der elektrische Heizer kann prinzipiell beliebig gestaltet sein, solange er elektrische Energie möglichst vollständig, beispielsweise zu mindestens 80%, in Wärmeenergie umwandelt. Ein elektrischer Heizer kann insbesondere resistiv arbeiten, das heißt er wird von elektrischem Strom durchflossen und aufgrund des elektrischen Widerstands erhitzt er sich dabei. Mehrere räumlich getrennte Heizeinheiten können auch gemeinsam den elektrischen Heizer bilden. Der elektrische Heizer beziehungsweise seine Heizeinheiten können im Gehäuseabschnitt der Wärmespeicherkörper angeordnet sein. Insbesondere können die Heizeinheiten zwischen den Wärmespeicherkörpern verteilt sein. Alternativ kann der elektrische Heizer aber auch außerhalb des Gehäuseabschnitts, an anderer Stelle des Fluidkreislaufs angeordnet sein. Das Wärmetransferfluid umströmt die Heizeinheiten und nimmt so Wärme auf, welches es darauf an die Wärmespeicherkörper weitergibt. Alternativ kann auch der elektrische Heizer durch einen zusätzlichen Wärmetauscher ersetzt sein; der zusätzliche Wärmetauscher kann beispielsweise Abwärme von insbesondere einem Kraftwerk oder Stahlwerk in den Energiespeicher einbringen.

Der Wärmetauscher zum Ausgeben von thermischer Energie aus dem Energiespeicher kann prinzipiell beliebig gestaltet sein, solange er Wärme vom Wärmetransferfluid weg übertragen kann. Beispielsweise kann er eine thermische Verbindung zwischen dem Fluidkreislauf des Wärmetransferfluides und einem Arbeitsfluidkreislauf darstellen. Wärme wird dann auf ein Arbeitsfluid im Arbeitsfluidkreislauf übertragen. Das Arbeitsfluid kann beispielweise über ein oder mehrere Turbinen-Generatoreinheiten oder eine andere Stromerzeugungseinrichtung elektrische Energie erzeugen. Eine Restwärme kann für Heizzwecke weitergenutzt werden. Der Wärmetauscher kann beispielsweise benachbarte oder ineinander verlaufende Rohre für Wärmetransferfluid und für Arbeitsfluid umfassen.

Die als zusätzliche Merkmale des erfindungsgemäßen Energiespeichers beschriebenen Eigenschaften ergeben bei bestimmungsgemäßer Verwendung Varianten des erfindungsgemäßen Verfahrens. Zudem kann die Steuereinheit des Energiespeichers dazu eingerichtet sein, beschriebene Verfahrensschritte auszuführen, insbesondere durch Ansteuerung der entsprechenden Komponenten des Energiespeichers.

### KURZBESCHREIBUNG DER FIGUREN

Ausführungsbeispiele der Erfindung werden nachstehend mit Bezug auf die beigefügten schematischen Figuren beschrieben:
- Fig. 1: zeigt schematisch einen gattungsbildenden Energiespeicher, der nicht zur Erfindung gehört;
- Fig. 2: zeigt schematisch einen verwandten Energiespeicher, der nicht zur Erfindung gehört; und
- Fig. 3: zeigt schematisch ein Ausführungsbeispiel eines erfindungsgemäßen Energiespeichers.

Gleiche und gleich wirkende Bestandteile sind in den Figuren in der Regel mit denselben Bezugszeichen gekennzeichnet.

### DETAILLIERTE BESCHREIBUNG VON AUSFÜHRUNGSBEISPIELEN

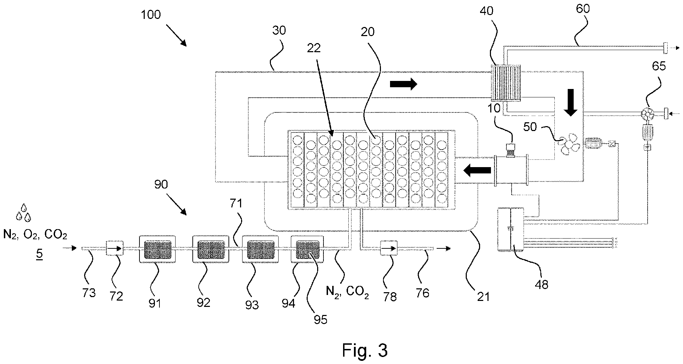

Fig. 3 zeigt ein Ausführungsbeispiel eines erfindungsgemäßen Energiespeichers 100. Der grundlegende Aufbau des Energiespeichers 100 kann dem Aufbau des eingangs beschriebenen Energiespeicher 100' entsprechen. Zur Energieaufnahme und Energiespeicherung erhitzt ein elektrischer Heizer 10 ein Wärmetransferfluid. Das erhitzte Wärmetransferfluid wird zu Wärmespeicherkörpern 20 geleitet und gibt Wärmeenergie an diese ab. Zur Entnahme von Wärmeenergie wird der elektrische Heizer 10 nicht betrieben, womit das Wärmetransferfluid nicht etwa Wärme an die Wärmespeicherkörper 20 abgibt, sondern von diesen aufnimmt. Das so erhitzte Wärmetransferfluid wird anschließend vorzugsweise zu einem Wärmetauscher 40 geleitet, wo es Wärme abgibt, beispielsweise an ein Arbeitsfluid in einer anderen Leitung oder in einem Arbeitsfluidkreislauf 60. Das Wärmetransferfluid umfasst ein Gasgemisch und kann optional auch Dampf umfassen. Es strömt angetrieben durch eine Strömungsmaschine 50, z.B. einen Ventilator, entlang der in Fig. 3 gezeigten Pfeile in einem Fluidkreislauf 30. Der Fluidkreislauf 30 bildet eine geschlossene Schleife und führt über den elektrischen Heizer 10, die Wärmespeicherkörper 20 und den Wärmetauscher 40. Eine elektronische Steuereinheit 48 kann den elektrischen Heizer 10, die Strömungsmaschine 50 und optional weitere Komponenten des Energiespeichers 100 steuern. Die Wärmespeicherkörper 20 sind in einem Gehäuse 21 angeordnet. Im dargestellten Beispiel befindet sich der elektrische Heizer 10 vor dem Gehäuse 21, wobei der elektrische Heizer 10 aber auch im Gehäuse 21 aufgenommen sein kann. Insbesondere kann er mehrere zwischen den Wärmespeicherkörpern 20 verteilte Heizeinheiten umfassen. Das Wärmetransferfluid strömt frei durch das Gehäuse 21, das heißt insbesondere ohne separierende Rohrleitungen im Gehäuse 21, welche das Wärmetransferfluid von den Wärmespeicherkörpern 20 trennen würden. Durch optionale Führungswände innerhalb des Gehäuses 21 kann das Wärmetransferfluid auch entlang einer Bahn an mehreren Wärmespeicherkörpern 20 nacheinander entlang geleitet werden. Aufgrund des großen Temperaturintervalls, über das die Wärmespeicherkörper 20 zur Energiespeicherung betrieben werden, schwanken die Temperatur und der Druck des Wärmetransferfluides im Gehäuse 21 ebenfalls stark.

Um einen Druckausgleich zwischen dem Inneren des Gehäuses 21 und einer Umgebung 5 außerhalb des Gehäuses 21 zu ermöglichen, umfasst das Gehäuse 21 eine Auslassleitung 76 zum Auslassen von Wärmetransferfluid bei zu hohem Druck im Gehäuse 21 und eine Druckausgleichsleitung 71 zum Einlassen von Wärmetransferfluid (nämlich behandelte Umgebungsluft) in das Gehäuse 21.

Die Auslassleitung 76 kann ein Einwegventil 78 (nachfolgend Auslass-Einwegventil 78) umfassen, über welches Wärmetransferfluid in die Umgebung 5 ausgelassen werden kann, wenn ein Innendruck im Gehäuse 21 einen Schwellwert zum Öffnen des Auslass-Einwegventils 78 übersteigt. Ansonsten bleibt das Auslass-Einwegventil 78 geschlossen.

Sinkt die Temperatur der Wärmespeicherkörper 20 im Gehäuse 21, so sinkt der Druck im Gehäuse 21 und es kann Luft als Wärmetransferfluid über die Druckausgleichsleitung 71 einströmen. Steigt die Temperatur der Wärmespeicherkörper 20, so steigt der Druck im Gehäuse 21 und es kann Wärmetransferfluid über die Auslassleitung 76 aus dem Gehäuse 21 ausgegeben werden.

Wie eingangs erläutert, soll vermieden werden, dass über die Druckausgleichsleitung 71 ein Wärmetransferfluid, das nennenswerte Anteile an Sauerstoffgas, Feuchtigkeit oder andere störende Bestandteile umfasst, in das Gehäuse 21 eingeleitet wird. Zumindest manche Anteile dieser störenden Bestandteile sollen entfernt werden. Dies wird erfindungsgemäß durch eine Schutzgaserzeugungsanlage 90 erreicht, die mit der Druckausgleichsleitung verbunden ist. Die Schutzgaserzeugungsanlage 90 umfasst nicht etwa ein Reservoir an Schutzgas, sondern erzeugt ein Schutzgas aus einströmenden Gasen, welche insbesondere Luft / Umgebungsluft aus einer Umgebung 5 sein können. Die Umgebung 5 ist außerhalb des Gehäuses 21 und kann insbesondere von einem Innenraum 22 des Gehäuses 21 durch eine Wärmeisolierungsschicht getrennt sein, welche die Wärmespeicherköper 20 umgibt. Wie in Fig. 3 schematisch angegeben, umfasst das in die Schutzgaserzeugungsanlage 90 einströmende Gasgemisch als Hauptbestandteile N₂, O₂ und CO₂. Das einströmende Gasgemisch kann auch Wasser umfassen, welches z.B. als Luftfeuchtigkeit (Dampf-Luft-Gemisch) oder auch als Tröpfchen (Nebel) vorliegen kann. Das Gasgemisch kann auch weitere störende Bestandteile umfassen, z.B. Salze. Im dargestellten Beispiel gelangt die Umgebungsluft über ein Einlassrohr 73 zur Schutzgaserzeugungsanlage 90, wobei prinzipiell auch auf das Einlassrohr 73 verzichtet werden kann. Das Einlassrohr 73 kann auch als Teil der Druckausgleichsleitung 71 angesehen werden.

Die Schutzgaserzeugungsanlage 90 ist hier beispielhaft als mehrstufige Filteranlage gebildet, deren Filter nacheinander von einströmender Umgebungsluft durchlaufen werden. Die dargestellten Filter umfassen einen Partikelfilter 91, einen Luftentfeuchter 92, einen Chemikalienfilter 93 und einen Sauerstofffilter 94.

Der Partikelfilter 91 kann insbesondere dem Herausfiltern von Staub dienen. Beispielsweise kann der Partikelfilter 91 ein Gitter, ein Blatt oder ein poröses Material umfassen, in dem Partikel (d.h. in der Luft enthaltene Feststoffe) festgehalten werden. Der Partikelfilter 91 kann auch als Zyklonfilter oder Elektrofilter gestaltet sein.

Der Luftentfeuchter 92 ist dazu eingerichtet, einen Feuchtigkeitsanteil von aufgenommener Umgebungsluft zu verringern, so dass über die Druckausgleichsleitung 71 und den Luftentfeuchter 92 in das Gehäuse 21 einströmende Gase einen im Vergleich zu Umgebungsluft reduzierten Feuchtigkeitsanteil haben. Der Feuchtigkeitsanteil kann als absolute Luftfeuchtigkeit verstanden werden oder als Gewichtsmenge der eingeleiteten Luft. Beispielsweise kann der Luftentfeuchter 92 ein Trocknungsmittel umfassen, in dem Wasser chemisch gebunden oder durch Adsorption gehalten wird. Insbesondere kann der Luftentfeuchter 92 ein Wassersorptionsmittel, z.B. ein Wasserabsorptionsmaterial oder ein Wasseradsorptionsmaterial wie Zeolith, Silikagel, CaO, MgO, Aluminiumoxid, Calcium, wasserbindende Calciumverbindungen oder ein anderes poröses Material mit Poren oder Kanälen umfassen, in denen Wasser und andere Stoffe adsorbiert werden können, während Stickstoffgas kaum oder gar nicht gebunden wird und die Poren passieren kann. Alternativ kann der Luftentfeuchter 92 auch ein Kondensationstrockner sein, der die aufgenommene Umgebungsluft kühlt, wodurch Feuchtigkeit kondensiert und abgeführt oder gesammelt werden kann. Insbesondere kann das Abkühlen der aufgenommenen Umgebungsluft durch eine Kältemaschine erfolgen, etwa durch eine Absorptions- oder Adsorptionskältemaschine, eine Kompressionskältemaschine oder mittels thermoelektrischer Kühlung.

Der Chemikalienfilter 93 umfasst in diesem Beispiel ein poröses Material, insbesondere mit einer inneren Oberfläche von größer 100 m²/g, beispielsweise Aktivkohle. In den Poren können Bestandteile der durchströmenden Umgebungsluft adsorbiert werden. Aktivkohle kann auch ein Entsalzen durchströmender Umgebungsluft bewirken, womit ein solcher Chemikalienfilter 93 auch als Entsalzer bezeichnet werden kann.

Allgemein ist ein Entsalzer dazu eingerichtet, einen Salzgehalt von aufgenommener Umgebungsluft zu verringern, so dass über die Druckausgleichsleitung 71 und den Entsalzer in das Gehäuse 21 einströmende Gase einen im Vergleich zu Umgebungsluft reduzierten Salzgehalt haben.

Bevorzugt wird zunächst der Partikelfilter 91 und anschließend der Luftentfeuchter 92, Chemikalienfilter 93 und Sauerstofffilter 94 durchlaufen. Andere Reihenfolgen sind aber ebenfalls möglich. In Abwandlungen kann die Schutzgaserzeugungsanlage 90 auch nur ein, zwei oder drei dieser Filterkomponenten umfassen.

Der Sauerstofffilter 94 umfasst ein Reduktionsmittel 95, bei dem es sich um ein mit Sauerstoffgas reagierendes Material handelt. Es kann zum Beispiel Kohle in Form von Pellets, gepresst oder als poröse Steine, umfassen. Bei kohlenstoffhaltigen Reduktionsmitteln kann einströmendes Sauerstoffgas O₂ zu CO₂ reagieren, welches sodann über die Druckausgleichsleitung 71 in das Gehäuse 21 einströmt. Die Hauptbestandteile des einströmenden Gasgemisches sind daher Sauerstoffgas und Kohlendioxid. Alternativ kann das Reduktionsmittel 95 auch ein Metall wie Zink oder Stahlwolle umfassen, welches vom Sauerstoffgas oxidiert wird und so den Sauerstoff bindet. Das ins Gehäuse 21 strömende Gas besteht dann im Wesentlichen aus N₂. Zum Aufheizen des Reduktionsmittels 95 oder der zur Schutzgaserzeugungsanlage 90 strömenden Luft wird eine optionale Heizung verwendet. Diese kann beispielsweise Heizdrähte umfassen. So kann beispielsweise am Reduktionsmittel 95 eine chemische Reaktion mit Sauerstoffgas erleichtert werden.

Der Partikelfilter 91, Luftentfeuchter 92, Chemikalienfilter 93 und Sauerstofffilter 94 können jeweils ein Filtergehäuse mit entsprechendem Filtermaterial (z.B. Reduktionsmittel 95) umfassen, wobei im Filtergehäuse ein Strömungsquerschnitt für Gas im Vergleich zum Einlassrohr 73 und im Vergleich zur Druckausgleichsleitung 71 erhöht ist. Der erhöhte Querschnitt wird vom entsprechenden Filtermaterial ausgefüllt, so dass eine große Reaktionsoberfläche bereitgestellt wird. Prinzipiell können die Filtermaterialien auch direkt in die Druckausgleichsleitung 71 eingebracht sein, womit die Schutzgaserzeugungsanlage 90 einen Abschnitt der Druckausgleichsleitung 71 darstellen kann.

Das druckabhängige Einleiten von Gas als Wärmetransferfluid in das Gehäuse 21 kann prinzipiell durch aktiv gesteuerte Komponenten erfolgen. Es kann aber bevorzugt sein, wie dargestellt ein Einwegventil 72 (nachfolgend Einlass-Einwegventil 72) zu verwenden. Dieses öffnet, wenn der Druck im Gehäuse 21 unter eine festgelegte Schwelle sinkt. Allein im geöffneten Zustand erlaubt es ein Einströmen von Gasen über die Schutzgaserzeugungsanlage 90 und die Druckausgleichsleitung 71 in das Gehäuse 21. Das Einlass-Einwegventil 72 kann wahlweise stromaufwärts oder stromabwärts vom Schutzgaserzeuger 70 angeordnet sein, womit entweder eine thermische Entkopplung zwischen dem Innenraum 22 und der Schutzgaserzeugungsanlage 90 erreicht wird, oder es erreicht wird, dass Umgebungsluft nur dann die Schutzgaserzeugungsanlage 90 erreicht, wenn die Umgebungsluft auch behandelt und in das Gehäuse 21 eingeleitet werden soll.

Im dargestellten Beispiel führt die Druckausgleichsleitung 71 in den Abschnitt des Gehäuses 21, in dem sich die Wärmespeicherkörper 20 befinden. Prinzipiell kann die Druckausgleichsleitung 71 aber auch an anderer Stelle mit dem Fluidkreislauf 30 verbunden sein, weshalb das Gehäuse 21 als die Begrenzung des vom Wärmetransferfluid eingenommenen Volumens angesehen werden kann und nicht auf den Gehäuseabschnitt beschränkt sein muss, in dem sich die Wärmespeicherkörper 20 befinden. Prinzipiell kann die Druckausgleichsleitung 71 auch dazu gestaltet sein, Gase in das Gehäuse 21 hinein und aus diesem heraus zu leiten. Auch kann prinzipiell eine Leitung mit dem Gehäuse 21 verbunden sein, welche sich sodann in die beschriebene Druckausgleichsleitung 71 und die Auslassleitung 76 aufspaltet.

Wie in Fig. 3 dargestellt, kann es bevorzugt sein, allein in oder an der Druckausgleichsleitung 71 die Schutzgaserzeugungsanlage 90 anzuordnen, während in/an der Auslassleitung 76 keine Schutzgaserzeugungsanlage angeordnet ist.

Durch die Schutzgaserzeugungsanlage 90 kann vorteilhafterweise sichergestellt werden, dass ein Gasgemisch mit wesentlich reduziertem Gehalt an störenden Bestandteilen wie Sauerstoffgas, Feuchtigkeit, Salz oder anderen Chemikalien eingeleitet wird. Gleichzeitig ist der Raumbedarf gering, insbesondere verglichen mit einem Expansionsvolumen wie in Fig. 2 gezeigt.

In der Figurenbeschreibung wurden beispielhafte Ausführungen präsentiert. Abwandlungen hiervon sind im Rahmen der beigefügten Ansprüche möglich. Insbesondere können einzelne Teile der Schutzgaserzeugungsanlage 90 entfallen.

## Patentansprüche

1. Energiespeicher zum Speichern von elektrischer Energie als Wärme, umfassend:
- einen elektrischen Heizer (10) zum Umwandeln von elektrischer Energie in Wärme;
- Wärmespeicherkörper (20), welche durch die Wärme erwärmt werden;
- einen Wärmetauscher (40) zum Ausgeben von Wärmeenergie aus dem Energiespeicher;
- ein Gehäuse (21), in dessen Innenraum (22) zumindest die Wärmespeicherkörper (20) angeordnet sind; und
- eine Druckausgleichsleitung (71), durch welche der Innenraum (22) des Gehäuses (21) mit einer Umgebung (5) verbunden ist;
**gekennzeichnet durch**
eine Schutzgaserzeugungsanlage (90), die mit der Druckausgleichsleitung (71) verbunden ist und eingerichtet ist zum Binden von Bestandteilen von durch die Druckausgleichsleitung (71) in das Gehäuse (21) einströmender Umgebungsluft.

2. Energiespeicher nach Anspruch 1,
wobei die Schutzgaserzeugungsanlage (90) einen Sauerstofffilter (94) mit einem Reduktionsmittel (95) umfasst, welches durch Reaktion mit Sauerstoffgas einen Sauerstoffgehalt aufgenommener Umgebungsluft verringert, so dass über die Druckausgleichsleitung (71) und den Sauerstofffilter (94) in das Gehäuse (21) einströmende Gase einen im Vergleich zu Umgebungsluft reduzierten Sauerstoffgasgehalt haben.

3. Energiespeicher nach unmittelbar vorstehendem Anspruch,
wobei das Reduktionsmittel (95) des Sauerstofffilters (94) ein Metall, Kohlenstoff oder eine kohlenstoffhaltige Verbindung umfasst.

4. Energiespeicher nach einem der vorstehenden Ansprüche,
wobei die Schutzgaserzeugungsanlage (90) einen Luftentfeuchter (92) umfasst, welcher dazu eingerichtet ist, einen Feuchtigkeitsanteil von aufgenommener Umgebungsluft zu verringern, so dass über die Druckausgleichsleitung (71) und den Luftentfeuchter (92) in das Gehäuse (21) einströmende Gase einen im Vergleich zu Umgebungsluft reduzierten Feuchtigkeitsanteil haben.

5. Energiespeicher nach dem unmittelbar vorstehendem Anspruch,
wobei der Luftentfeuchter (92) ein Wassersorptionsmittel umfasst oder einen Kondensationstrockner, der zur Luftkühlung eingerichtet ist.

6. Energiespeicher nach einem der vorstehenden Ansprüche,
wobei die Schutzgaserzeugungsanlage (90) einen Chemikalienfilter (93) oder Entsalzer umfasst, welcher dazu eingerichtet ist, einen Chemikalien- oder Salzgehalt von aufgenommener Umgebungsluft zu verringern, so dass über die Druckausgleichsleitung (71) und den Chemikalienfilter (93) oder Entsalzer in das Gehäuse (21) einströmende Gase einen im Vergleich zu Umgebungsluft reduzierten Chemikalien- oder Salzgehalt haben.

7. Energiespeicher nach dem unmittelbar vorstehendem Anspruch,
wobei der Chemikalienfilter (93) Aktivkohle umfasst.

8. Energiespeicher nach einem der vorstehenden Ansprüche,
wobei die Schutzgaserzeugungsanlage (90) einen Partikelfilter (91) umfasst.

9. Energiespeicher nach einem der vorstehenden Ansprüche,
wobei die Schutzgaserzeugungsanlage (90) als mehrstufige Filteranlage gestaltet ist, bei welcher Umgebungsluft durch zwei oder mehr der folgenden Filter geleitet wird: Sauerstofffilter (94); Luftentfeuchter (92); Chemikalienfilter (93) oder Entsalzer und Partikelfilter (91).

10. Energiespeicher nach einem der vorstehenden Ansprüche,
wobei die Schutzgaserzeugungsanlage (90) eine Kassettenhalterung umfasst und in einer oder mehreren austauschbaren Kassetten eines oder mehrere aus Folgendem angeordnet sind: Sauerstofffilter (94), Luftentfeuchter (92), Chemikalienfilter (93) oder Entsalzer und Partikelfilter (91).

11. Energiespeicher nach einem der vorstehenden Ansprüche,
wobei die Schutzgaserzeugungsanlage (90) mindestens eine Heizung umfasst, die mit einem aus folgendem verbunden ist: Sauerstofffilter (94); Luftentfeuchter (92); Chemikalienfilter (93) oder Entsalzer und Partikelfilter (91).

12. Energiespeicher nach einem der vorstehenden Ansprüche,
wobei in der Druckausgleichsleitung (71) oder an der Schutzgaserzeugungsanlage (90) ein Einlass-Einwegventil (72) angeordnet ist, welches einen Fluidauslass aus dem Gehäuse (21) verhindert und eine Strömung von der Schutzgaserzeugungsanlage (90) in das Gehäuse (21) druckabhängig erlaubt.

13. Energiespeicher nach einem der vorstehenden Ansprüche,
wobei zum Druckausgleich eine Auslassleitung (76) am Gehäuse (21) vorhanden ist, welche einen Fluidauslass aus dem Gehäuse (21) in eine Umgebung (5) ermöglicht, und
wobei in der Auslassleitung (76) ein Auslass-Einwegventil (78) angeordnet ist, welches einen Fluideinlass in das Gehäuse (21) verhindert und eine Strömung aus dem Gehäuse (21) heraus druckabhängig erlaubt.

14. Energiespeicher nach einem der vorstehenden Ansprüche,
wobei die Wärmespeicherkörper (20) aus Metall bestehen und Wärmetransferfluid im Gehäuse (21) an den metallischen Wärmespeicherkörpern (20) entlang geleitet wird, und
wobei ein Fluidkreislauf (30) gebildet ist zum Leiten des Wärmetransferfluides entlang an dem elektrischen Heizer (10), den Wärmespeicherkörpern (20) und dem Wärmetauscher (40).

15. Verfahren zum Betreiben eines Energiespeichers zum Speichern von elektrischer Energie als Wärme, wobei das Verfahren umfasst:
- Umwandeln von elektrischer Energie in Wärme mittels eines elektrischen Heizers (10);
- Erwärmen von Wärmespeicherkörpern (20) durch die Wärme, wobei die Wärmespeicherkörper (20) in einem Innenraum (22) eines Gehäuses (21) angeordnet sind;
- Ausgeben von Wärmeenergie aus dem Energiespeicher mittels eines Wärmetauschers (40); und
- Bereitstellen eines Druckausgleichs im Gehäuse (21) über eine Druckausgleichsleitung (71), die mit dem Gehäuse (21) verbunden ist;
**gekennzeichnet durch** die folgenden Schritte:
- Aufnehmen von Umgebungsluft aus einer Umgebung (5) in eine Schutzgaserzeugungsanlage (90), die mit der Druckausgleichsleitung (71) verbunden ist;
- Binden von Bestandteilen der aufgenommenen Umgebungsluft in der Schutzgaserzeugungsanlage (90); und
- Einleiten von durch die Schutzgaserzeugungsanlage (90) behandelter Umgebungsluft in den Innenraum (22) des Gehäuses (21).
